# FASCICULE DE BREVET EUROPEEN

(11) **EP 1 462 829 B1**
(45) Date de publication et mention de la délivrance du brevet: **31.08.2016**
(21) Numéro de dépôt: 04290697.4
(22) Date de dépôt: 12.03.2004
(51) Int. Cl.: G02B 6/00, F21S 8/10, F21V 8/00

(54) **Dispositif d'éclairage ou de signalisation pour véhicule automobile**
Beleuchtungs- oder Signal-Vorrichtung für Kraftfahrzeuge
LIghting or signalling device for motor vehicles

(30) Priorité: 25.03.2003 FR 0303606
(43) Date de publication de la demande: 29.09.2004
(73) Titulaire: VALEO VISION, 93012 Bobigny Cedex (FR)
(72) Inventeur: Gasquet, Jean-Claude, 89100 Sens (FR)

(56) Documents cités:
- DE-A- 19 831 002
- DE-A1- 10 123 263
- FR-A- 2 796 130
- FR-A- 2 819 040
- US-A1- 2002 014 720
- PATENT ABSTRACTS OF JAPAN vol. 1997, no. 12, 25 décembre 1997 (1997-12-25) & JP 09 207661 A (HONDA ACCESS CORP;KOITO MFG CO LTD), 12 août 1997 (1997-08-12)
- PATENT ABSTRACTS OF JAPAN vol. 1995, no. 11, 26 décembre 1995 (1995-12-26) & JP 07 198953 A (YASUHIRO KOIKE;OTHERS: 01), 1 août 1995 (1995-08-01)

## Description

L'invention concerne un dispositif d'éclairage ou de signalisation, notamment pour un véhicule automobile.

L'invention concerne plus particulièrement un dispositif d'éclairage ou de signalisation, pour un véhicule automobile, comprenant un bloc réalisé en matière transparente, et comprenant au moins une source lumineuse qui est située en vis-à-vis d'une face d'admission de la lumière associée du bloc transparent, du type dans lequel la source lumineuse émet des rayons lumineux qui pénètrent dans le bloc transparent à travers la face d'admission, et qui se propagent dans le bloc transparent par réflexions totales successives sur les parois du bloc transparent, et du type dans lequel au moins une zone de diffusion de la lumière est incluse dans le bloc transparent, les rayons lumineux incidents qui atteignent la zone de diffusion étant diffusés dans toutes les directions, et notamment vers une face avant de projection à travers laquelle ils émergent globalement selon une direction longitudinale d'éclairage ou de signalisation.

Il est courant de rassembler dans un seul boîtier plusieurs fonctions d'éclairage ou de signalisation du véhicule automobile, de manière à simplifier le câblage électrique de ces différentes fonctions.

Chaque fonction comporte une source lumineuse, un réflecteur et éventuellement une glace, ces différents éléments étant agencés de façon à fournir un faisceau d'éclairage ou de signalisation dont les caractéristiques géométriques et photométriques doivent être conformes à différentes réglementations. Chaque fonction nécessite ainsi un volume minimal pour son implantation dans un dispositif d'éclairage ou de signalisation particulier.

Cependant, le volume disponible pour implanter des dispositifs d'éclairage ou de signalisation est de plus en plus réduit, aussi bien à l'avant qu'à l'arrière du véhicule automobile. En effet, les contraintes de l'aérodynamique et les conceptions des stylistes conduisent à des formes très différentes de celles qui résultent uniquement des considérations techniques.

Ainsi, dans de nombreux cas, l'espace disponible pour regrouper des fonctions dans un même boîtier est insuffisant, et il est alors nécessaire de répartir les différentes fonctions dans des boîtiers différents, d'où un accroissement du coût et une augmentation du temps de câblage et de montage.

Afin de résoudre ce problème, il est connu d'utiliser des dispositifs dits « guides de lumière » qui comportent un bloc de matière transparente dans lequel des rayons lumineux émis par une source lumineuse extérieure sont canalisés. Les rayons lumineux admis se propagent dans le bloc transparent globalement par réflexions totales successives sur les parois du bloc transparent.

Le bloc transparent comporte des hétérogénéités qui diffusent les rayons lumineux incidents dans toutes les directions. Une partie des rayons diffusés est notamment diffusée vers une face avant de projection du bloc transparent. Les rayons qui atteignent la face avant de projection selon un angle déterminé émergent du bloc transparent. Un observateur extérieur voit ainsi les rayons lumineux émergeants comme s'ils étaient émis par les hétérogénéités, c'est-à-dire comme si les hétérogénéités étaient elles-mêmes des sources lumineuses.

Un tel dispositif, connu par exemple de DE 198 31002, est peu encombrant, et il permet une grande liberté esthétique, notamment en ce qui concerne les motifs que dessinent les hétérogénéités.

Selon cette conception connue, la zone de diffusion est créée par des modifications de la structure de volumes élémentaires du bloc transparent. On a proposé de réaliser ces modifications structurelles en utilisant un rayonnement laser focalisé vers le volume élémentaire. Il est ainsi possible de créer des zones de diffusion de formes complexes de façon à réaliser des motifs participant à l'esthétique du véhicule automobile.

Cependant, la réalisation des zones de diffusion requiert des techniques et des machines spécifiques qui ne sont pas répandues sur les chaînes de montage. De plus, la réalisation de motifs en volume par un tel procédé est lente, car il faut que le laser dessine point par point le motif dans le bloc transparent.

Afin de résoudre ces problèmes, l'invention propose un dispositif d'éclairage ou de signalisation du type décrit précédemment, caractérisé en ce que la zone de diffusion est un noyau en matière diffusante autour duquel le bloc transparent est surmoulé.

Selon d'autres caractéristiques de l'invention :
- le noyau de diffusion est formé de volumes élémentaires transparents à travers lesquels les rayons lumineux incidents sont réfractés successivement aléatoirement de façon à émerger du noyau de diffusion selon une direction aléatoire ;
- le bloc transparent a la forme d'une barre formant guide de lumière dont au moins une extrémité forme la face d'admission de la lumière, et dont une face intermédiaire qui est agencée entre les deux extrémités, forme la face avant de projection ;
- le bloc transparent a la forme d'une plaque verticale transversale dont une surface avant forme la face de projection ;
- la face d'admission est perpendiculaire à la face de projection ;
- la tranche de la plaque forme la face d'admission de la lumière ;
- la source lumineuse est une diode électroluminescente ;
- le dispositif comporte un réflecteur qui est agencé en regard d'une face arrière du bloc transparent, opposée à la face avant de projection, de manière à réfléchir les rayons lumineux qui émergent du bloc transparent par sa face arrière sensiblement vers l'intérieur du bloc transparent.

D'autres caractéristiques et avantages de l'invention apparaîtront au cours de la lecture de la description détaillée qui va suivre, pour la compréhension de laquelle on se reportera aux dessins annexés, parmi lesquels :
- la figure 1 est une vue en perspective qui représente un premier mode de réalisation d'un dispositif d'éclairage ou de signalisation selon les enseignements de l'invention comportant un bloc transparent dans lequel un noyau de diffusion de la lumière est inclus ;
- la figure 2 est une vue en section du dispositif de la figure 1 selon le plan de coupe 2-2 ;
- la figure 3 est une vue en perspective qui représente un second mode de réalisation du dispositif de la figure 1 ;
- la figure 4 est une vue similaire à celle de la figure 3 qui représente une variante du second mode de réalisation.

On adoptera dans la suite de cette description une orientation longitudinale, verticale et transversale indiquée par le trièdre direct L, V, T des figures.

Dans la suite de la description, des éléments similaires, identiques ou analogues sont désignés par les mêmes références.

On a représenté aux figures un dispositif d'éclairage ou de signalisation 10, pour un véhicule automobile.

La direction longitudinale est orientée vers l'avant, c'est-à-dire ici globalement suivant la direction longitudinale du véhicule que le dispositif d'éclairage 10 équipe.

Le dispositif d'éclairage ou de signalisation 10 comporte principalement un bloc 12 réalisé en matière transparente, et au moins une source lumineuse, par exemple une diode électroluminescente 14, aussi appelée « LED ».

De manière générale, le bloc transparent 12 comporte au moins une face d'admission 16 de la lumière en vis-à-vis de laquelle la source lumineuse est agencée. L'axe optique principal de la source est normal à la face d'admission 16. Les rayons lumineux issus de la source lumineuse pénètrent à l'intérieur du bloc transparent 12 en traversant sa face d'admission 16.

Le bloc transparent 12 comporte aussi une face avant 18 de projection de la lumière dont la normale est orientée globalement longitudinalement vers l'avant. Les rayons lumineux émergents qui sortent du bloc transparent 12 à travers la face de projection 18 selon une direction globale moyenne longitudinale, remplissent la fonction d'éclairage ou de signalisation.

Le bloc transparent 12 forme un guide de lumière dans lequel les rayons lumineux admis Ra sont canalisés. Afin de canaliser la lumière, le bloc transparent 12 est constitué d'une matière transparente telle que du plastique qui a un indice de réfraction plus élevé que le milieu dans lequel est immergé le bloc transparent 12 notamment l'air. Chaque rayon lumineux admis Ra atteint une paroi du bloc transparent avec un angle α par rapport à la normale N à la face atteinte. Lorsque l'angle α est supérieur à un angle de seuil déterminé β, il est réfléchi à l'intérieur du bloc transparent 12. Les rayons lumineux admis Ra se propagent donc dans le bloc transparent 12 par réflexions totales successives sur les parois du bloc transparent 12, avant de se réfracter vers l'extérieur.

Afin de provoquer la réfraction d'une partie des rayons lumineux admis Ra à travers la face de projection 18, le bloc transparent 12 comporte au moins une zone 19 de diffusion de la lumière. La zone de diffusion 19 est incluse dans le bloc transparent 12. Les rayons lumineux incidents qui atteignent la zone de diffusion 19, sont diffusés dans toutes les directions à l'intérieur du bloc transparent 12. Une partie des rayons diffusés Rd atteint notamment la face avant de projection 18 sous un angle α inférieur à l'angle de seuil β. Ces rayons diffusés Rd émergent ainsi à travers la face de projection 18 globalement selon la direction longitudinale d'éclairage ou de signalisation.

Selon les enseignements de l'invention, la zone de diffusion 19 est un noyau en matière diffusante qui est noyé dans le bloc transparent 12. Le noyau de diffusion 19 est entièrement inclus dans le volume délimité par les parois du bloc transparent 12.

Le bloc transparent 12 est réalisé par surmoulage autour du noyau de diffusion 19. Le noyau de diffusion 19 forme donc ici un insert. Pour faciliter l'opération de surmoulage tout en conservant des propriétés optiques adéquates, le bloc 12 est avantageusement réalisé en matière plastique transparente telle que du polymétacrylate de méthyle (PMMA).

Le noyau de diffusion 19 est avantageusement formé de volumes élémentaires transparents à travers lesquels les rayons lumineux incidents sont réfractés successivement aléatoirement de façon à émerger du noyau de diffusion 19 selon une direction aléatoire. De cette façon, la perte d'intensité lumineuse lors de la diffusion est beaucoup plus faible que si la diffusion est réalisée par des réflexions aléatoires.

Le bloc transparent 12 et le noyau de diffusion 19 peuvent être réalisés sous de multiples formes en fonction des impératifs d'esthétique et d'encombrement qui influencent leur conception.

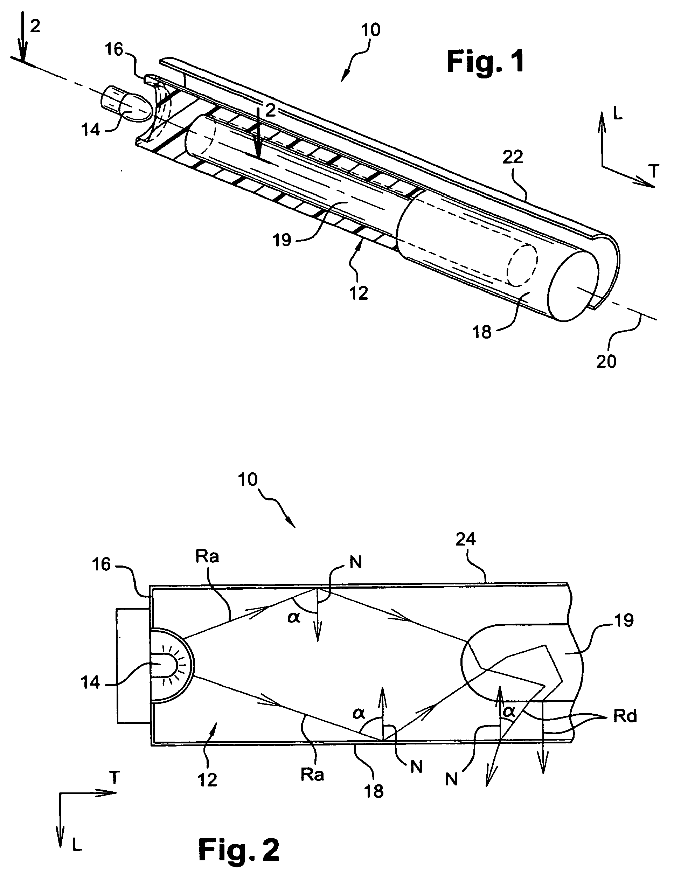

Selon un premier mode de réalisation représenté sur les figures 1 et 2, le bloc transparent 12 a une forme linéaire.

Le bloc transparent 12 est obtenu par le déplacement d'une section élémentaire transversale globalement circulaire le long d'une ligne directrice 20.

La forme de la ligne directrice 20 est définie librement par l'homme du métier notamment en fonction des contraintes esthétiques. Comme représenté sur les figures 1 et 2, la ligne directrice 20 a ici une forme rectiligne d'orientation transversale.

Comme illustrée à la figure 1, le contour de la section élémentaire comporte une portion périphérique avant formant la face avant de projection 18.

Le bloc transparent 12 comporte deux extrémités. Les rayons lumineux pénètrent dans le bloc transparent 12 par au moins une de ses extrémités formant face d'admission 16. Les rayons lumineux sont émis par une source lumineuse par exemple une diode électroluminescente 14, qui est située dans une cavité de l'extrémité 16.

Le noyau de diffusion 19 a ici la forme d'un cylindre concentrique au bloc transparent 12.

Comme représenté à la figure 2, les rayons lumineux admis Ra par l'extrémité 16 sont canalisés à l'intérieur du bloc transparent 12 par des réflexions totales successives sur le contour des sections élémentaires, qui sont dues à la différence d'indices de réfraction entre l'air et le bloc transparent 12, selon la direction générale de la ligne directrice 20.

Lorsque les rayons lumineux admis Ra sont incidents sur le noyau de diffusion 19, ils sont diffusés dans toutes les directions, et notamment vers l'avant à l'intérieur du bloc transparent 12.

Les rayons diffusés Rd vers l'avant qui atteignent la portion avant d'éclairage 22 du bloc transparent 12 avec un angle d'incidence α inférieur à l'angle de seuil β, sont réfractés par la face de projection 18, et ils émergent ainsi à l'extérieur du bloc transparent 12.

La face avant de projection 18 réalise ainsi la fonction d'éclairage ou de signalisation requise pour le véhicule automobile.

Lors du fonctionnement d'un tel dispositif 10, un observateur situé en vis-à-vis de la face de projection 18 percevra le noyau de diffusion 19 illuminé comme une source de lumière.

Un tel dispositif 10 permet de réaliser une fonction d'éclairage ou de signalisation répondant aux contraintes de style et d'encombrement du véhicule.

Cependant, une partie non négligeable de la lumière est diffusée vers l'arrière du bloc transparent 12 comme indiqué par les rayons à la figure 2. Il est donc avantageux d'agencer un réflecteur 22 à l'arrière du bloc transparent 12. Le réflecteur 22 épouse la forme de la face arrière 24 du bloc 12 de façon à réfléchir les rayons qui sortent vers l'intérieur du bloc transparent 12. Le réflecteur 22 est disposé à distance du bloc transparent 12, de façon qu'il subsiste une pellicule d'air entre la face arrière 24 du bloc transparent 12 et le réflecteur 22. La pellicule d'air est indispensable pour la réflexion totale des rayons admis Ra.

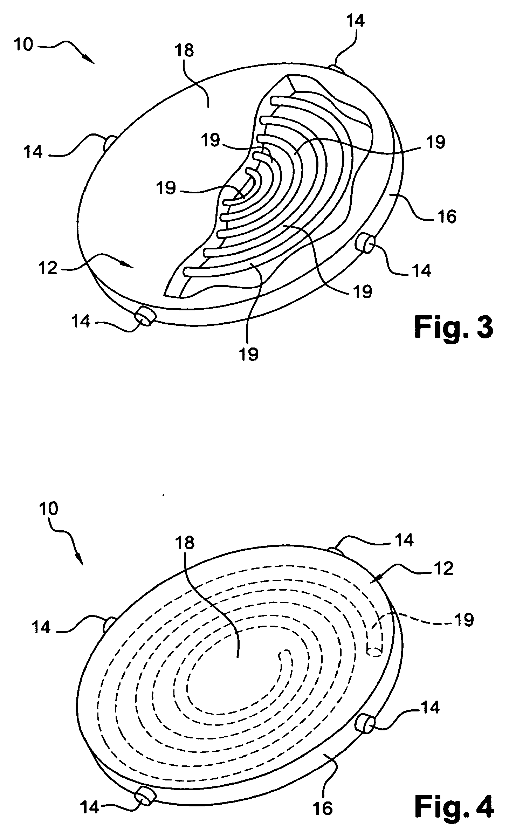

Selon un deuxième mode de réalisation représenté à la figure 3, le bloc transparent 12 présente une forme de palet circulaire épais. L'axe du palet est orienté longitudinalement. Il comporte une paroi avant en forme de disque qui est ici la face de projection 18, et une paroi arrière parallèle.

La tranche transversale circulaire du palet forme la face d'admission de la lumière 16. Quatre sources lumineuses sont agencées vis-à-vis de chaque quadrant de la tranche. Les sources lumineuses sont ici des diodes électroluminescentes

La face d'admission 16 est ici avantageusement orthogonale à la face de projection 18. Le dispositif d'éclairage ou de signalisation 10 est ainsi moins encombrant longitudinalement dans le véhicule.

Les rayons lumineux Ra admis à l'intérieur du bloc transparent 12 à travers la tranche se propagent par réflexions totales successives sur les parois avant et arrière du bloc transparent 12, selon une direction globale sensiblement comprise dans le plan vertical transversal.

Le bloc transparent 12 comporte ici plusieurs noyaux de diffusion 19 en forme de cercles concentriques. Les noyaux de diffusion 19 sont agencés dans le bloc transparent 12 de manière coaxiale avec la tranche circulaire du bloc transparent 12.

Selon une variante représentée à la figure 4, le noyau de diffusion 19 présente une forme de spirale concentrique à la tranche du bloc transparent 12.

Les rayons sont diffusés par les noyaux de diffusion 19 selon le principe précédemment décrit. Une telle configuration présente notamment l'avantage d'avoir une face transversale d'admission suffisamment grande pour être éclairée par plusieurs sources lumineuses. De plus, la face avant de projection 18 présente une surface de projection de la lumière plus étalée que dans le premier mode de réalisation. Il est donc possible de produire un faisceau lumineux projeté plus intense que dans le premier mode de réalisation.

Selon une variante (non représentée) similaire à celle du premier mode de réalisation, un réflecteur est agencé en regard, et à distance, de la face arrière du bloc transparent 12 de façon que les rayons lumineux qui émergent vers l'arrière soient réfléchis vers l'intérieur du bloc transparent 12.

Les formes du bloc transparent 12 et du noyau de diffusion 19 décrites dans les modes de réalisation sont données à titre d'exemples non limitatifs.

## Revendications

1. Dispositif d'éclairage ou de signalisation (10), pour un véhicule automobile, comprenant :
- un bloc (12) réalisé en matière transparente ;
- et au moins une source lumineuse (14) qui est située en vis-à-vis d'une face d'admission (16) de la lumière associée du bloc transparent (12) ;
du type dans lequel la source lumineuse (14) émet des rayons lumineux (Ra) qui pénètrent dans le bloc transparent (12) à travers la face d'admission (16), et qui se propagent dans le bloc transparent (12) par réflexions totales successives sur les parois du bloc transparent (12), et du type dans lequel au moins une zone (19) de diffusion de la lumière est incluse dans le bloc transparent (12), les rayons lumineux incidents (Ra) qui atteignent la zone de diffusion (19) étant diffusés dans toutes les directions, et notamment vers une face avant de projection (18) à travers laquelle ils émergent globalement selon une direction longitudinale d'éclairage ou de signalisation,
**caractérisé en ce que** la zone de diffusion (19) est un noyau en matière diffusante autour duquel le bloc transparent (12) est surmoulé.

2. Dispositif (10) selon l'une quelconque des revendications précédentes, **caractérisé en ce que** le noyau de diffusion (19) est formé de volumes élémentaires transparents à travers lesquels les rayons lumineux incidents (Ra) sont réfractés successivement aléatoirement de façon à émerger du noyau de diffusion (19) selon une direction aléatoire.

3. Dispositif (10) selon l'une quelconque des revendications précédentes, **caractérisé en ce que** le bloc transparent (12) a la forme d'une barre formant guide de lumière dont au moins une extrémité (16) forme la face d'admission de la lumière, et dont une face intermédiaire (18) qui est agencée entre les deux extrémités, forme la face avant de projection.

4. Dispositif (10) selon l'une quelconque des revendications 1 ou 2, **caractérisé en ce que** le bloc transparent (12) a la forme d'une plaque verticale transversale dont une surface avant (18) forme la face de projection.

5. Dispositif (10) selon l'une quelconque des revendications précédentes, **caractérisé en ce que** la face d'admission (16) est perpendiculaire à la face de projection (18).

6. Dispositif (10) selon la revendication précédente prise en combinaison avec la revendication 4, **caractérisé en ce que** la tranche (16) de la plaque forme la face d'admission de la lumière.

7. Dispositif (10) selon l'une quelconque des revendications précédentes, **caractérisé en ce que** la source lumineuse (14) est une diode électroluminescente.

8. Dispositif (10) selon l'une quelconque des revendications précédentes, **caractérisé en ce que** qu'il comporte un réflecteur (22) qui est agencé en regard d'une face arrière (24) du bloc transparent (12), opposée à la face avant de projection (18), de manière à réfléchir les rayons lumineux (Rd) qui émergent du bloc transparent (12) par sa face arrière (24) sensiblement vers l'intérieur du bloc transparent (12).

## Patentansprüche

1. Beleuchtungs- oder Signalgebungsvorrichtung (10) für ein Kraftfahrzeug, mit
- einem aus transparenten Material ausgeführten Block (12);
- und wenigstens einer Lichtquelle (14), die gegenüber einer dem transparenten Block zugeordneten Lichteintrittsfläche (16) angeordnet ist;
des Typs, bei dem die Lichtquelle (14) Lichtstrahlen (Ra) emittiert, die in den transparenten Block (12) durch die Eintrittsfläche (16) eindringen und die sich in dem transparenten Block (12) durch aufeinanderfolgende Totalreflexionen an den Wänden des transparenten Blocks (12) ausbreiten, und des Typs, bei dem wenigstens ein Lichtstreuungsbereich (19) in dem transparenten Block (12) enthalten ist, wobei die einfallenden Lichtstrahlen (Ra), die den Streuungsbereich (19) erreichen, in alle Richtungen gestreut werden, und insbesondere zu einer vorderen Projektionsfläche (18), durch die hindurch sie allgemein in einer Beleuchtungs- oder Signalgebungslängsrichtung austreten,
**dadurch gekennzeichnet, dass** der Streuungsbereich (19) ein Kern aus lichtstreuendem Material ist, der von dem transparenten Block (12) umspritzt ist.

2. Vorrichtung (10) nach dem vorhergehenden Anspruch,
**dadurch gekennzeichnet, dass** der Streuungskern (19) aus transparenten Elementarvolumina gebildet ist, durch die hindurch die einfallenden Lichtstrahlen (Ra) nacheinander zufällig gebrochen werden, derart, dass sie aus dem Streuungskern (19) in einer zufälligen Richtung austreten.

3. Vorrichtung (10) nach einem der vorhergehenden Ansprüche,
**dadurch gekennzeichnet, dass** der transparente Block (12) die Form einer einen Lichtleiter bildenden Leiste hat, bei der wenigstens ein Ende (16) die Lichteintrittsfläche bildet, und bei der eine Zwischenfläche (18), die zwischen den beiden Enden angeordnet ist, die vordere Projektionsfläche bildet.

4. Vorrichtung (10) nach einem der Ansprüche 1 oder 2,
**dadurch gekennzeichnet, dass** der transparente Block (12) die Form einer vertikalen Querplatte hat, bei der eine vordere Fläche (18) die Projektionsfläche bildet.

5. Vorrichtung (10) nach einem der vorhergehenden Ansprüche,
**dadurch gekennzeichnet, dass** die Eintrittsfläche (16) senkrecht zur Projektionsfläche (18) ist.

6. Vorrichtung (10) nach dem vorhergehenden Anspruch in Verbindung mit Anspruch 4,
**dadurch gekennzeichnet, dass** die Kante (16) der Platte die Lichteintrittsfläche bildet.

7. Vorrichtung (10) nach einem der vorhergehenden Ansprüche,
**dadurch gekennzeichnet, dass** die Lichtquelle (14) eine Leuchtdiode ist.

8. Vorrichtung (10) nach einem der vorhergehenden Ansprüche,
**dadurch gekennzeichnet, dass** sie einen Reflektor (22) umfasst, der gegenüber einer Rückseite (24) des transparenten Blocks (12) an der der vorderen Projektionsfläche (18) entgegengesetzten Seite derart angeordnet ist, dass die Lichtstrahlen (Ra), die aus dem transparenten Block (12) durch die Rückseite (24) austreten, im Wesentlichen ins Innere des transparenten Blocks (12) reflektiert werden.

## Claims

1. Lighting or signalling device (10), for a motor vehicle, comprising:
- a unit (12) produced from transparent material;
- and at least one light source (14) that is situated opposite a face (16) emitting light associated with the transparent unit (12);
of the type in which the light source (14) emits light rays (Ra) that enter the transparent unit (12) through the admission face (16), and which propagate in the transparent unit (12) by successive total reflections on the walls of the transparent unit (12), and of the type in which at least one light-diffusion zone (19) is included in the transparent unit (12), the incident light rays (Ra) that reach the diffusion zone (19) being diffused in all directions, and in particular towards a front projection face (18) through which they emerge overall in a longitudinal lighting or signalling direction,
**characterised in that** the diffusion zone (19) is a core of diffusing material around which the transparent unit (12) is moulded on.

2. Device (10) according to any one of the preceding claims, **characterised in that** the diffusion core (19) is formed from transparent elementary volumes through which the incident light rays (Ra) are successively refracted randomly so as to emerge from the diffusion core (19) in a random direction.

3. Device (10) according to any one of the preceding claims, **characterised in that** the transparent unit (12) is in the form of a bar forming a light guide, at least one end (16) of which forms the light-admission face and an intermediate face (18) of which, which is arranged between the two ends, forms the front projection face.

4. Device (10) according to either one of claims 1 or 2, **characterised in that** the transparent unit (12) is in the form of a transverse vertical plate, a front surface (18) of which forms the projection face.

5. Device (10) according to any one of the preceding claims, **characterised in that** the admission face (16) is perpendicular to the projection face (18).

6. Device (10) according to the preceding claim taken in combination with claim 4, **characterised in that** the edge (16) of the plate forms the admission face for the light.

7. Device (10) according to any one of the preceding claims, **characterised in that** the light source (14) is a light emitting diode.

8. Device (10) according to any one of the preceding claims, **characterised in that** it comprises a reflector (22) that is arranged opposite a rear face (24) of the transparent unit (12), opposite to the front projection face (18), so as to reflect the light rays (Rd) that emerge from the transparent unit (12) through its rear face (24) substantially towards the inside of the transparent unit (12).
